Europäisches Patentamt

European Patent Office

Office européen des brevets

(11) Publication number: **0 515 058 A2**

# EUROPEAN PATENT APPLICATION

(21) Application number: **92304072.9**

(22) Date of filing: **06.05.92**

(51) Int. Cl.⁵: **G09G 1/16**, G09G 5/00

(30) Priority: **20.05.91 US 704566**

(43) Date of publication of application:
**25.11.92 Bulletin 92/48**

(84) Designated Contracting States:
**DE FR GB**

(71) Applicant: **Hughes Aircraft Company**
**7200 Hughes Terrace**
**Los Angeles, California 90080-0028(US)**

(72) Inventor: **Saunders, Randy**
**1525 Somerset Way**
**Upland, California 91786(US)**
Inventor: **Waldhauer, Charles H., Jr.**
**330 South Poppy Lane**
**Glendora, California 91740(US)**

(74) Representative: **Colgan, Stephen James et al**
**CARPMAELS & RANSFORD 43 Bloomsbury**
**Square**
**London WC1A 2RA(GB)**

(54) **Image enhancement system for color video display.**

(57) An image enhancement system 10 for substantially eliminating the lines present in a color image produced by a video display 12. The inventive image enhancement system 10 is operative to sequentially vary the location, as perceived from a viewing position X, of a video image relative to a screen 16 of the display 12. The system 10 includes a controllable optical arrangement 14 which may be placed in first and second orientations relative to the display screen 16. The optical arrangement 14 provides a first optical path between the viewing position X and the display screen 16 when in the first orientation, and provides a second optical path between the viewing position X and the display screen 16 when in the second orientation. The inventive image enhancement system 10 also includes an electromechanical controller 22, 26, 28 and 30 for placing the controllable optical arrangement 14 in the first and second orientations.

FIG. 1.

## BACKGROUND OF THE INVENTION

Field of the Invention:

This invention relates to video displays. More specifically, this invention relates to techniques for enhancing images generated by color video displays.

While the present invention is described herein with reference to a particular embodiment, it is understood that the invention is not limited thereto. Those having ordinary skill in the art and access to the teachings provided herein will recognize additional embodiments within the scope thereof.

Description of the Related Art:

As is well known, conventional color video displays include a screen having an interior surface to which adheres a phosphor coating. The color image produced by the display is generated by scanning the phosphor coating with a composite electron beam. The composite beam includes electron beams generated by three separate electron guns, one for each primary color (red, green and blue). The composite beam is guided to converge on particular locations on the phosphor coating by a shadowmask positioned between the electron guns and the display screen. At each of the locations on the phosphor surface scanned by the beam there exists a triangular arrangement of a red, a green and a blue phosphor dot. When illuminated by the composite electron beam each phosphor dot triad generates a color image pixel of a known hue and intensity - thus creating a color image.

The shadowmask includes an array of closely spaced circular apertures through which the composite electron beam passes. The shadowmask is positioned relative to the phosphor surface such that each aperture is aligned with an individual phosphor dot triad. It follows that the resolution of the resultant color image is a function of the spacing of the phosphor dot triads and therefore of the density of the shadowmask apertures. However, extremely fine shadowmasks are difficult to manufacture and may be damaged due to heating induced by the incident electron beam. Accordingly, the resolution of the video display is limited to the maximum density of the shadowmask aperture pattern.

Since the shadowmask permits only the phosphor dot triads to be scanned by the electron beam, light is emitted by the screen exclusively at locations (pixels) aligned with these triads. It follows that the border regions separating the pixels will appear as gaps in the image produced by the video display. These gaps are most readily apparent when the display screen is viewed through a magnifying device. Such a magnified view may be necessary in, for example, applications which require detailed real time scrutiny of an image of a scene.

Resolution of the image could potentially be enhanced, thereby reducing degradation due to the presence of pixel gaps, by increasing the number of color pixels produced by scanning of the electron beam. However, because the minimum pixel size is constrained by the fineness of the shadowmask, the display screen would need to be enlarged in order to increase resolution. In addition, the memory in the video display would need to be augmented in order to accommodate the additional pixels.

The apparent resolution of certain monochromatic displays has been increased by a technique known as "spot dithering", in which an electrical signal is employed to deflect the beam to the space between scan lines. However, this technique is inappropriate for color displays since it impairs color balance and image convergence.

Accordingly, a need in the art exists for a technique for substantially reducing the perceived gaps appearing in a color image produced by a video display.

## SUMMARY OF THE INVENTION

The need in the art for a technique for substantially eliminating the gaps present in a color image produced by a video display is addressed by the image enhancement system of the present invention. The inventive image enhancement system is operative to sequentially vary the location, as perceived from a viewing position, of a video image relative to a screen of the display. The system of the present invention includes a controllable optical arrangement which may be placed in first and second orientations relative to the display screen. The optical arrangement provides a first optical path between the viewing position and the display when in the first orientation and provides a second optical path between the viewing position and the display when in the second orientation. The inventive image enhancement system also includes an electromechanical controller for placing the controllable optical arrangement in the first and second orientations.

## BRIEF DESCRIPTION OF THE DRAWINGS

Fig. 1 is a top view of a preferred embodiment of the image enhancement system of the present invention.

Fig. 2 shows a front view of a portion of a video display screen with pixel locations P indicated thereon.

Figs. 3a, 3b and 3c show a portion of a video display screen as viewed from a position X with a controllable mirror arrangement disposed in first, second and third orientations such that a set of pixels P appear at pixel locations P1, P2, and P3.

Fig. 4 shows a front view of the controllable mirror arrangement included within the system of the present invention.

Figs. 5a, 5b, and 5c graphically depict the relative phases of a first set of current drive signals impressed by a multi-phase square wave generator on first, second and third signal lines.

Fig. 5d illustratively represents a train of synchronization pulses transmitted by the video display along a synchronization line to the square wave generator.

Fig. 6 is a simplified illustrative representation of an alternative embodiment of the image enhancement system of the present invention.

## DETAILED DESCRIPTION OF THE INVENTION

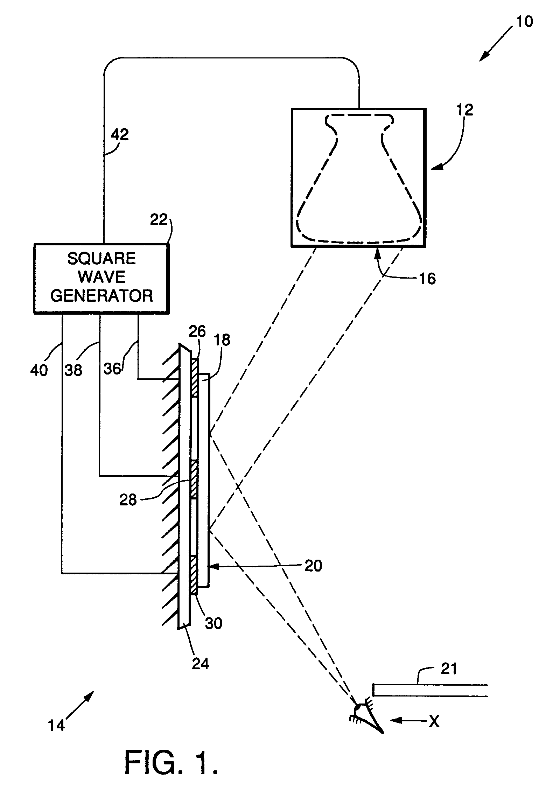

Fig. 1 is a top view of a preferred embodiment of the image enhancement system 10 of the present invention. The inventive image enhancement system 10 includes a color video display 12 for producing a color image. The color image from the display 12 is redirected by a controllable mirror arrangement 14 to an observer positioned at a viewing point X. As is discussed more fully below, the inventive image enhancement system 10 is operative to substantially eliminate the pixel separation gaps inherent in images produced by the color video display 12.

The color display 12 is of conventional design and may, for example, comprise a commercial television. The display 12 includes a viewing screen 16 having an interior surface (not shown) coated with a light-emissive material such as phosphor. The display 12 includes red, green and blue electron guns (not shown) which scan a composite electron beam across the phosphor coating on the interior surface of the screen 16 in a back and forth manner from top to bottom. Upon scanning a last row at the bottom of the screen 16, the red, green and blue electron guns are again aligned with an upper corner of the screen 16 and resume back and forth scanning to create an interlaced scan. The flyback period corresponds to the time interval during which the electron guns are aligned with this initial scanning position. When scanned by the electron gun, the phosphor layer emits light through particular pixel locations of the screen 16 in order to produce a color image. Since a shadowmask included within the display 12 only permits scanning of discrete regions of the phosphor coating, the portions of the screen 16 bordering each pixel location are not illuminated by photon emissions from the phosphor coating. These pixel border areas thus appear as "gaps" in the color image produced by the display 12.

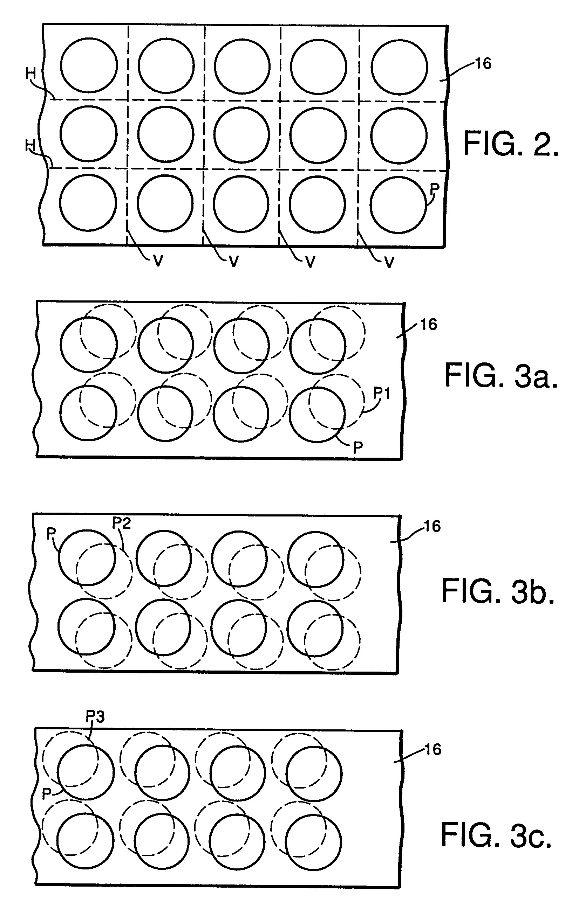

The size of the pixel array giving rise to a color image is dependent on the dimensions of the screen 16. For example, a screen having a diagonal dimension of 19" will typically have 1280 pixels in each horizontal row and 1024 pixels in each vertical column. Fig. 2 shows a front view of a portion of the screen 16 with pixel locations P indicated thereon. As shown in Fig. 2, the non-illuminated regions of the screen 16 bordering the pixels P are indicated by horizontal (H) and vertical (V) dashed lines. The areas of the screen 16 indicated by the lines H and V will generate gaps in the color image produced by the display 12. It is an object of the present invention to substantially eliminate these lines from the image produced by the display 12 as viewed from the position X.

As shown in Fig. 1, the controllable mirror arrangement 14 includes a mirror 18 which forms an optical path between the display 12 and the observer at the viewing position X. A partition 21 prevents the observer from directly viewing the screen 16. By adjusting the orientation of a first surface 20 of the mirror 18 relative to the screen 16, the apparent location of each pixel P (Fig. 2) relative to the screen 16 may be altered. For example, Fig. 3a shows a portion of the screen 16 as viewed from position X with the mirror 18 disposed in a first orientation such that the pixels P appear at pixel locations P1. Similarly, in Fig. 3b the pixels P appear to an observer at position X to be at locations P2 when the mirror 18 is placed in a second orientation relative to the screen 16. Finally, in Fig. 3c the pixels P appear to be at locations P3 relative to the screen 16 for a third orientation of the mirror 18. It follows that by sequentially placing the mirror 18 in these first, second and third orientations the position of an image generated by the display 12 will appear at three separate locations relative to the screen 16. By inspecting Fig. 2 in conjunction with Figs. 3a, 3b and 3c it can be seen that if the mirror 18 is rapidly moved between the first, second and third orientations the pixel locations P1, P2 and P3 will appear to overlap the pixel border regions indicated by the lines H, V. In this manner the gaps H, V may be substantially eliminated from an image produced by the display 12 when such image is observed from position X (Fig. 1).

The controllable mirror arrangement 14 is operative to alter the orientation of the mirror surface 20 relative to the screen 16 during the "flyback period" of the trio of electron guns included within the display 12. The orientation of the mirror surface 20 is adjusted during the flyback period so as not to shift the line of sight of an observer at position X while the screen 16 is being scanned, since such a shift during scanning could potentially degrade the clarity of the resultant color image.

The flyback period is on the order of two to three percent of the time taken by the electron guns to scan or "paint" the entire area of the phosphor coating affixed to the interior of the screen 16. Complete scans of the screen 16 by the electron guns are typically performed at a frame rate of approximately 60 Hz, which results in a flyback period of approximately 0.33 to 0.5 ms. The controllable mirror arrangement 14 (Fig. 1) is designed to be capable of changing the orientation of the mirror 18 during the flyback period in response to drive signals provided by a multi-phase square wave generator 22 which gives square wave motion to the electromechanical actuators. A square wave input may have to be shaped to give true square wave motion to the optical element. As shown in Fig. 1, the mirror 18 and a fixed support plane 24 sandwich first, second and third electromechanical actuators 26, 28 and 30. The actuators are preferably realized by piezoelectric crystals, and change shape in response to variation in the current supplied by the generator 22.

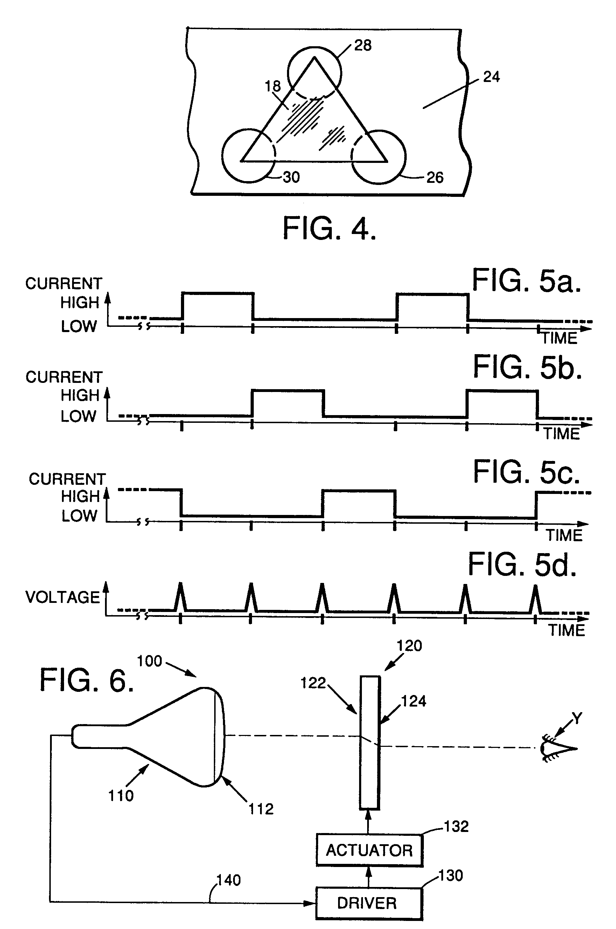

Fig. 4 shows a front view of the controllable mirror arrangement 14. As revealed by Fig. 4, the mirror 18 is triangular and is supported by the first, second and third piezoelectric crystals 26, 28 and 30 at the corners thereof. The first surface 20 of the mirror 18 is silvered (reflective), while the opposing rear surface is conventionally glued to the crystals 26, 28 and 30. The surfaces of the crystals 26, 28 and 30 contacting the support plane 24 and the mirror 18 are preferably planar in order to facilitate adhesion. The triangular shape of the mirror 18 allows the line of sight from the viewing position X to be adjusted both vertically and horizontally relative to the screen 16 by selectively varying the current to the crystals 26, 28 and 30. In this manner, the mirror arrangement 14 places the mirror 18 in the first, second and third orientations necessary to shift the pixel locations P to the apparent pixel locations P1, P2 and P3 (Figs. 3a, 3b and 3c).

As shown in Fig. 1, the first, second and third piezoelectric crystals 26, 28 and 30 are connected to the square wave generator 22 by first, second and third control lines 36, 38 and 40. The control lines 36, 38 and 40 may be routed through apertures (not shown) defined by the support plane 24 in order to contact the crystals 26, 28 and 30. The generator 22 is electrically connected to the display 12 via a synchronization line 42. The synchronization line 42 transmits a synchronization voltage pulse generated internally within the display 12 to the generator 22 upon commencement of the flyback period. The synchronization pulse ensures that the appropriate phase is maintained among the drive signals carried by the lines 36, 38 and 40 such that reorientation of the mirror 18 occurs only during the flyback period. Figs. 5a, 5b and 5c graphically depict the relative phases of a first set of current drive signals impressed by the generator on the lines 36, 38 and 40. This first set of drive signals induces movement of the mirror 18 such that the apparent pixel locations sequentially vary among the locations P1, P2 and P3 as shown in Figs. 3a, 3b and 3c. In addition, Fig. 5d illustratively represents the train of synchronization pulses transmitted by the display 12 along the synchronization line 42 to the generator 22. Comparing Figs. 5a, 5b and 5c with Fig. 5d, it is seen that the synchronization pulses may be utilized by the generator 22 to trigger current transitions on the lines 36, 38 and 40.

As noted above, the display 12 is typically operative at a 60 Hz frame rate, and thus the frequency of the synchronization pulse train is also 60 Hz. It follows that the current drive signals (Figs. 5a, 5b and 5c) each have a frequency of 20 Hz. Thus, the image generated by the display 12 is cycled among three apparent locations relative to the screen 16 at a rate of approximately 20 Hz. However, the human eye generally perceives image position occurring at a 20 Hz rate as continuous motion. Accordingly, by shifting the apparent location of the light-emitting pixels P to non-illuminated regions of the screen 16, the present invention is operative to remove pixel boundary lines from the image generated by the display 12.

Fig. 6 is a simplified illustrative representation of an alternative embodiment of the image enhancement system 100 of the present invention. As shown in Fig. 6, the system 100 includes a video display 110 having a viewing screen 112, this combination being substantially identical to the display 12 with viewing screen 16 (Fig. 1). The system 100 also includes a transparent, plane-surfaced rectangular slab 120 interposed in the optical path between the display 110 and a viewing position Y. The slab 120 may be fabricated from an optically transparent material such as Lucite, and will preferably have a thickness of approximately 0.75 inches. By adjusting the orientation of first and second planar surfaces 122 and 124 of the slab 120 relative to the display 110, the apparent locations of light-emitting pixels illuminating the screen 112 may again be sequentially translated as illustrated in Figs. 3a, 3b and 3c.

The image enhancement system 100 also includes a driver circuit 130 for controlling an electromechanical actuator (not shown) coupled to the transparent slab 120. The electromechanical actuator is designed to alter the orientation of the surfaces 122 and 124 of the slab 120 relative to the display screen 112 in response to a control signal from the driver circuit 130. The actuator need be capable of altering the orientation of the transparent slab 120 such that the line of sight of the observer at position Y may move both vertically and horizontally relative to the screen 112. Again, the driver circuit 130 is electrically connected to the display 12 via a second synchronization line 140. The second synchronization line 140 transmits a synchronization voltage pulse generated internally within the display 110 to the circuit 130 upon commencement of the flyback period. The synchronization pulses carried by the line 140 trigger the circuit 130 to instruct the electromechanical actuator to initiate reorientation of the transparent slab 120 only during the flyback period.

Thus the present invention has been described with reference to a particular embodiment in connection with a particular application. Those having ordinary skill in the art and access to the teachings of the present invention will recognize additional modifications and applications within the scope thereof. For example, those skilled in the art may be aware of optical devices other than a pivoted mirror or transparent slab for shifting the line of sight of the observer relative to the video display screen. Similarly, the invention is not limited to a particular sequence of apparent pixel location translations. In particular, the line of sight of the observer may be shifted between more than three apparent pixel locations provided that the frame rate of the display is sufficiently large to prevent the perceived image from moving discontinuously.

It is therefore contemplated by the appended claims to cover any and all such modifications.

## Claims

1. In a system having a color video display for producing an image engendered by a plurality of light-emitting pixels within said display, said pixels being separated by a plurality of pixel borders, an arrangement for varying the apparent location of said pixels relative to said display, comprising:

   optical means for redirecting said light from said pixels such that from a viewing position said pixels appear to occupy first and second locations relative to said pixel borders when said optical means is placed in first and second orientations, respectively, and

   control means for placing said optical means in said first and second orientations.

2. The system of Claim 1 wherein said optical means includes a transparent optical member positioned in optical alignment between said viewing position and said display.

3. The system of Claim 2 wherein said control means includes means for adjusting the orientation of a first surface of said optical member relative to said display.

4. The system of Claim 3 wherein said display further includes means for periodically altering the color and intensity of said light emitted by said pixels, said alterations being separated by a flyback period.

5. The system of Claim 4 wherein said adjusting means includes synchronization means for adjusting the orientation of said first surface during said flyback period.

6. The system of Claim 1 wherein said optical means includes a controllable mirror arrangement optically aligned with said viewing position and said display.

7. The system of Claim 6 wherein said control means includes means for adjusting the orientation of a first surface of said mirror relative to said display.

8. The system of Claim 7 wherein said means for adjusting includes a plurality of piezoelectric crystals sandwiched between a second surface of said mirror and a mounting plane.

9. The system of Claim 8 wherein said means for adjusting further includes a driver circuit for altering the shape of said crystals by varying the supply of an electrical current thereto.

10. The system of Claim 9 wherein said display further includes means for periodically altering the color and intensity of said light emitted by said pixels, said alterations being separated by a flyback period.

11. The system of Claim 10 wherein said adjusting means includes synchronization means for providing a reference to said driver circuit.

12. A method for varying the location, as perceived from a viewing position, of an image produced by a video display relative to said display, comprising the steps of:

    a) providing a first optical path between said viewing position and said display;

    b) providing a second optical path between said viewing position and said display; and

    c) sequentially placing said viewing position in optical alignment with said display via said first and second optical paths.

**13.** In a system having a color video display for producing an image generated by a plurality of light-emitting pixels within said display, said pixels being separated by a plurality of pixel borders, a method for varying the apparent location of said pixels relative to said display, comprising the steps of:

a) redirecting said light from said pixels such that from a viewing position said pixels appear to occupy a first location relative to said pixel border;

b) redirecting said light from said pixels such that from said viewing position said pixels appear to occupy a second location relative to said pixel border; and

c) controlling said redirection of said light such that from said viewing position said pixels sequentially appear to occupy said first and second locations relative to said pixel border.

FIG. 1.

FIG. 2.

FIG. 3a.

FIG. 3b.

FIG. 3c.

FIG. 4.

FIG. 5a.

CURRENT
HIGH
LOW
TIME

FIG. 5b.

CURRENT
HIGH
LOW
TIME

FIG. 5c.

CURRENT
HIGH
LOW
TIME

FIG. 5d.

VOLTAGE
TIME

FIG. 6.

ACTUATOR

DRIVER